# EUROPEAN PATENT SPECIFICATION

(11) **EP 0 572 243 B1**
(45) Date of publication and mention of the grant of the patent: **13.03.1996**
(21) Application number: 93304097.4
(22) Date of filing: 26.05.1993
(51) Int. Cl.: H02G 7/00, E04H 12/12

(54) **Reinforced concrete (electric) mast/pylon and method of repairing with fiber reinforced composite sheets**
Stahlbeton-(Strom-)Mast und Verfahren zum Reparieren mit Fiberverstärkten Composite-Matten
Colonne électrique renforcée de béton et méthode à réparer avec des mattes composites

(30) Priority: 29.05.1992 JP 164336/92
(43) Date of publication of application: 01.12.1993
(73) Proprietor: Tonen Corporation, Tokyo (JP)
(72) Inventor: Tanaka, Yoshinori, c/o Tonen Corporation, Iruma-gun, Saitama-ken (JP); Saito, Makoto, c/o Tonen Corporation, Iruma-gun, Saitama-ken (JP)
(74) Representative: Harvey, David Gareth

(56) References cited:
- EP-A- 0 172 093
- EP-A- 0 262 818
- DE-A- 3 506 677
- PATENT ABSTRACTS OF JAPAN unexamined applications, C section, vol. 11, no. 53, February 19, 1987 THE PATENT OFFICE JAPANESE GOVERNMENT, page 95 C 404

## Description

This invention relates to a method of repairing an electric pole made of concrete such as reinforced concrete and also to such an electric pole. More specifically, the invention relates to the repair of an electric pole made of concrete by using reinforcing fiber-containing reinforcement material such as a reinforcement fiber sheet containing carbon fibers arranged in a uni-directional arrangement, impregnating the reinforcement material with a thermosetting resin and curing the resin impregnated reinforcement material to thereby form a fiber reinforced plastic.

Many electric poles made of reinforced concrete are used for distributing electric power in urban districts and also supplying power to trains. Such an electric pole is usually produced by casting concrete by a centrifugal casting process on the inner and outer sides of a substantially cylindrical cage-like core formed by reinforcement bars, and it has a tapered hollow cylindrical structure.

When the electric pole made of reinforced concrete is exposed to sunlight, rain and winds in its long outdoor use, deterioration of the surface concrete and corrosion of inner reinforcement bars proceed resulting in deterioration of the mechanical strength in use. Similar deterioration of the mechanical strength also takes place when the concrete surface is damaged by being struck or abraded by objects.

When the mechanical strength of the reinforced concrete electric pole is deteriorated, the pole is replaced with a new one or repaired.

Hitherto, repair was made by merely filling cracks produced in the concrete surface with mortar. Such repair is insufficient to restore the mechanical strength of the electric pole. It is also known from DE-A-3 506 677 to strengthen a concrete pole by assembling a mould there about and casting concrete in the mould.

An object of the invention is to provide a method of repairing an electric pole made of concrete such as reinforced concrete, the mechanical strength of which has deteriorated in outdoor use or by damage caused by being struck by objects, which method uses a carbon fiber reinforcement material in such form as a reinforcement fiber sheet with the carbon fibers arranged uni-directionally, the reinforcement material being impregnated with a thermosetting resin and then cured to form a fiber reinforced plastic material, and thus permits ready repair of the electric pole to restore the mechanical strength thereof, as well as preventing occasional electric accidents and ensuring daily safety, and also provides such an electric pole.

To attain the above object of the invention, there is provided a method of repairing an electric pole made of concrete, which comprises the steps of winding a base reinforcement material containing carbon fibers as reinforcement fibers on a portion of the concrete electric pole to be repaired, then winding an insulating reinforcement material containing insulating fibers as reinforcement fibers as an outermost layer such as to fully cover the base reinforcement material, and curing a thermosetting resin impregnating the carbon reinforcement fibers and insulating reinforcement fibers.

Preferably, the base reinforcement material is used in the form of a uni-directionally arranged reinforcement fiber sheet with the carbon fibers arranged in one direction via an adhesive layer on a support sheet. Also preferably, the insulating reinforcement material is used in the form of a uni-directionally arranged reinforcement fiber sheet with the insulating fibers arranged in one direction via an adhesive layer on a support sheet.

The base and insulating reinforcement materials may be wound on the electric pole either after or before impregnating the carbon and insulating fibers with resin. As a further alternative, it is possible to coat a resin on the electric pole, then wind the base reinforcement material thereon to impregnate the carbon fibers with the resin, then coat a resin on the base reinforcement material, then wind the insulating reinforcement material to impregnate the insulating fibers with the resin.

According to the invention, there is also provided an electric pole made of concrete, having a repair which comprises an inner wound layer of a carbon fiber reinforced composite material wound on the electric pole and an outer wound layer of an insulating fiber reinforced composite material fully covering the carbon fiber reinforced composite material, the inner wound layer being formed by a cured thermosetting resin impregnating the carbon fibers wound on the pole surface, and the outer layer being formed by a cured thermosetting resin impregnating the insulating reinforcement fibers of said insulating fibre reinforced composite material.

The invention will now be described by way of example only with reference to the accompanying drawings, in which:
Fig. 1 is a sectional view showing an example of uni-directionally arranged reinforcement fiber sheet used as a base reinforcement material in the method of repair according to the invention;
Fig. 2 is a perspective view illustrating the way of winding a reinforcement fiber sheet of carbon fibers in the method of repair according to the invention;
Fig. 3 is a sectional view illustrating the way of winding a reinforcement fiber sheet of insulating fibers as an outermost layer on the reinforcement fiber sheet of carbon fibers in the method of repair according to the invention;
Fig. 4 is a sectional view illustrating an embodiment of the method of repair according to the invention;
Fig. 5 is a sectional view illustrating a different embodiment of the method of repair according to the invention;
Fig. 6 is a sectional view showing a further embodiment of the method of repair according to the invention;
Figs. 7 (A) and (B) are, respectively, a plan and sectional views showing a sample of a comparative example used in a test to examine the effect of provision of the reinforcement fiber sheet of insulating fibers as the outermost layer in the method of repair according to the invention;
Figs. 8 (A) and (B) are, respectively, a plan and sectional views showing a sample of an example used in the similar test; and
Fig. 9 is an elevational view illustrating a method of measurement of the resistance of the sample surface in the effect examination test.

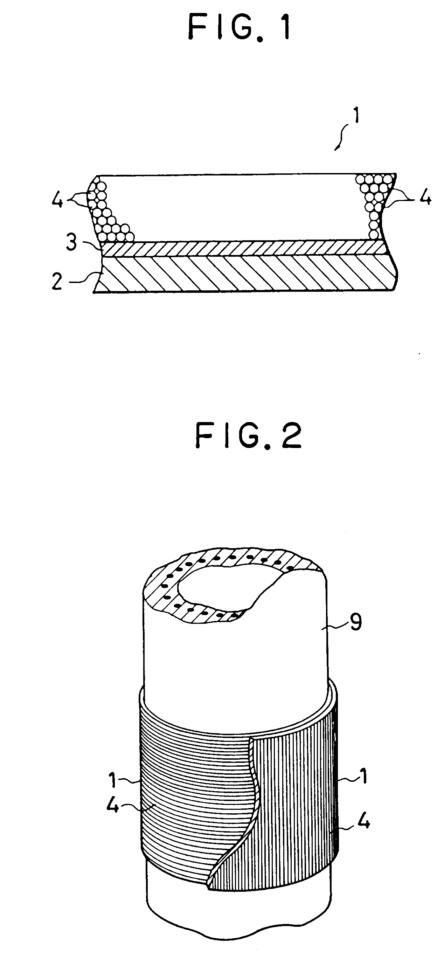

Fig. 1 is a sectional view showing an example of uni-directionally arranged reinforcement fiber sheet which is used as a reinforcement material in the method of repair according to the invention.

The uni-directionally arranged reinforcement fiber sheet, generally designated at 1, comprises a support sheet 2, an adhesive layer 3 provided thereon, and carbon fibers 4 arranged uni-directionally on the support sheet 2 via the adhesive layer 3.

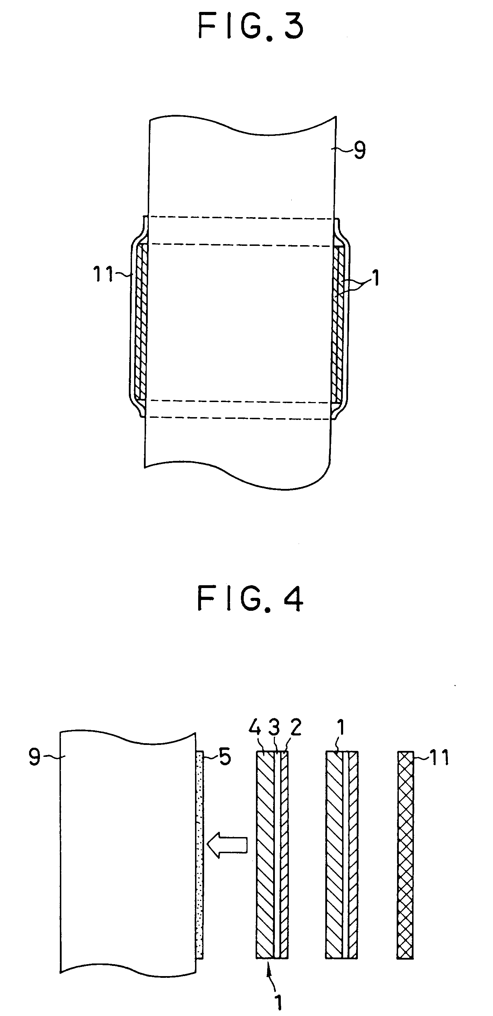

In the method of repair according to the invention, this base reinforcement fiber sheet 1 is used, and at the site of repair of a reinforced concrete electric pole it is provided for repair by impregnating the carbon fibers 4 with a thermosetting resin. Basically, the base reinforcement fiber sheet 1 is wound on the surface of a pole portion to be repaired, and either before or after its winding the carbon fibers 4 are impregnated with a thermosetting resin, which is cured to render the carbon fibers into a fiber reinforced plastic (i.e., fiber reinforced composite material). It is a feature of the invention that at this time a second reinforcement fiber sheet 11, as shown in Fig.3, containing insulating fibers is wound as an insulating reinforcement material and as an outermost layer on the base reinforcement fiber sheet 1.

For the support sheet 2 may usually be used insulating cloths, glass cloths, releasing sheets, nylon films, etc. Particularly suitable for use are sheets of highly insulating fibers, e.g., glass fibers, aramide fibers and like organic fibers. By applying the base reinforcement fiber sheet 1 with the support sheet 2 on the outer side, the sheet 2 may serve as an insulating layer for the carbon fibers 4. The thickness of the support sheet 2 is 1 to 500 µm, preferably 5 to 100 µm, from the standpoints of the flexibility and capability of supporting the carbon fibers 4. In case of using scrim cloths, glass cloths, etc. as the support sheet 2, the carbon fibers can be impregnated with a thermosetting resin from the side of the sheet 2.

The adhesive forming the adhesive layer 3 is not particularly limited so long as it permits at least tentative bonding of the carbon fibers 4 to the support sheet 2, but it is suitable to use a resin having sufficient affinity to thermosetting resins. For example, when an epoxy resin is used as the thermosetting resin, an epoxy type adhesive is suitably used. Since the adhesive layer 3 needs to permit only tentative bonding of the carbon fibers 4, its thickness is 1 to 500 µm, preferably 10 to 30 µm.

The uni-directionally arranged carbon fibers 4 of the base reinforcement fiber sheet 1 are formed by uni-directionally arranging a fiber bundle comprising many fiber filaments with or without light twist on the adhesive layer 3 and pressing the fiber bundle from above. When the fiber bundle is pressed, it is slightly unbundled, and its filaments are bonded as a plurality of laminated layers due to bundling agent or coupling by preliminarily given twist and in a uni-directional arrangement on the support sheet 2 via the adhesive layer 3. In this way, desired base reinforcement fiber sheet 1 can be obtained.

In this case, the fiber bundles may be arranged closely or coarsely at adequate intervals. The fiber filaments of the fiber bundles may or may not be opened. The degree of pressing of the fiber bundles depends on the desired layer thickness of the carbon fibers 4. As an example, carbon fiber bundles each containing about 12,000 filaments with a diameter of 5 to 15 µm is pressed to a width of about 5 mm. As noted above, according to the invention the base reinforcement fiber sheet 1 is wound on the surface of a portion of the reinforced concrete electric pole, and the thermosetting resin impregnating the carbon fibers 4 is cured to be rendered into a carbon fiber reinforced plastic (i.e., a carbon fiber reinforced compisite material) for effecting the repair.

The base reinforcement fiber sheet 1 may be wound on the reinforced concrete electric pole by any number of turns or layers unless the number is excessive. For obtaining reinforcement in all directions, it is suitable to wind the sheet 1 on the portion to be repaired of the reinforced concrete electric pole 9 at least by one layer such that the direction of the carbon fibers 4 coincides with the circumferential direction of the electric pole 9 and also at least by one layer such that the direction of the carbon fibers 4 coincides with the axial direction ofthe electric pole 9, as shown in Fig. 2.

However, in case when it is desired to particularly increase reinforcement with respect to bending forces applied to the reinforced concrete electric pole 9 or when the electric pole 9 has many circumferential cracks, it is possible to increase the number of turns or layers of the base reinforcement fiber sheet 1 wound such that the direction of the carbon fibers 4 coincides with the axial direction of the electric pole 9. Conversely, in case when it is desired to increase the reinforcement with respect to shearing forces applied to the reinforced concrete electric pole 9 or when the electric pole 9 has many axial cracks, it is suitable to increase the number of turns or layers of the base reinforcement fiber sheet 1 wound such that the direction of the carbon fibers 4 coincides with the circumferential direction of the electric pole 9.

To let the support sheet 2 serve as an insulating layer for the carbon fibers 4, the base reinforcement fiber sheet 1 is suitably wound with the support sheet 2 on the outer side.

As the thermosetting resin to be impregnated in the carbon fibers 4 may be used epoxy, polyester, vinyl ester, urethane resins, etc. Particularly suitable are room temperature thermosetting resins prepared by adjusting thermosetting resin curing agents (hardners) or curing accelerators as to provide for curing at normal temperature. Where a usual thermosetting resin is used to impregnate the carbon fibers, it is necessary to cure the resin by heating the reinforcement fiber sheet wound on the reinforced concrete electric pole. Where the room temperature thermosetting resin is used to impregnate the carbon fibers, it can be cured by leaving the reinforcement fiber sheet wound on the reinforced concrete electric pole. Thus, it is possible to improve the workability of the repair.

The carbon fibers 4 may be impregnated with the thermosetting resin either before or after winding the base reinforcement fiber sheet 1 on the reinforced concrete electric pole. In case of impregnating with the thermosetting resin after the winding, as the support sheet 2 of the base reinforcement fiber sheet 1 may be used a resin permeable sheet, e.g., scrim cloth, glass cloth, etc.

The carbon fibers 4 used for the base reinforcement fiber sheet 1 are a good electric conductor. Therefore, if they are partly exposed due to wear of or damage to the obtained reinforcement fiber plastic, an electric accident is liable to occur in such case as when an electric wire is broken. This means that the daily safety is lacking. According to the invention, a reinforcement fiber sheet 11 of insulating fibers is wound as an insulating reinforcement material and as an outermost layer to fully cover the base reinforcement fiber sheet 1, as shown in Fig. 3.

The reinforcement fiber sheet 11 of insulating fibers is suitably wound such as to provide a margin of 10 to 50 mm at the top and bottom with respect to the base reinforcement fiber sheet 1 of carbon fibers. As the insulating fibers may be used such organic fibers as glass fibers and aramide fibers, these fibers being particularly highly insulating. The support sheet suitably also uses glass fibers, aramide fibers or like organic fibers. Further, in addition to the reinforcement fiber sheet 11 with insulating fibers arranged uni-directionally via the adhesive layer on the support sheet, it is possible to use insulating fiber materials in the forms of mats, cloths, etc. of insulating fibers.

According to the invention, the repair of reinforced concrete electric pole 9 is made as follows. In one form of the invention, as shown in Fig. 4, thermosetting resin 5 is coated to a thickness of about 100 µm, for instance, on the surface of a portion of reinforced concrete electric pole 9 to be repaired, then the base reinforcement fiber sheet 1 of carbon fibers is wound by a desired number of turns or layers by taking the direction of the carbon fibers 4 into consideration, and then the reinforcement fiber sheet 11 of insulating fibers is wound as the outermost layer, and then the carbon fibers 4 are impregnated with the thermosetting resin 5 by means of pressing. In this case, every time when winding the sheet 1 on the previously wound sheet 1 the thermosetting resin may be coated on the support sheet 2 of the previously wound sheet 1. Then, impregnation with thermosetting resin is further made using a hand roller or the like, and then a cover is provided by winding a retainer tape. Then, the reinforcement fiber sheets 1 and 11 are heated or, in case where a room temperature thermosetting resin is used, are left, to cure the thermosetting resin impregnating the carbon fibers 4 and the insulating fibers. In this way, the base reinforcement fiber sheet 1 is rendered into a carbon fiber reinforced plastic to effect repair of the reinforced concrete electric pole 9, while the reinforcement fiber sheet 11 of insulating fibers as the outermost layer provides electric insulation for preventing occasional electric accidents and ensuring everyday safety.

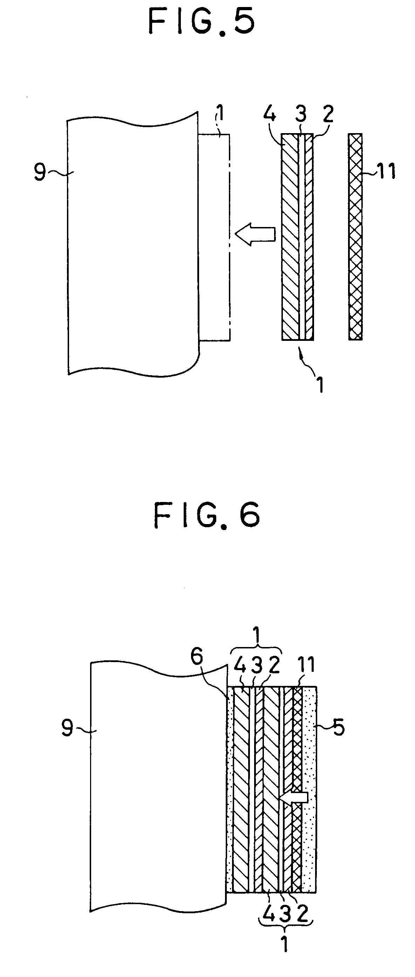

In a different form of the invention, at the site of repair the carbon fibers 4 of the reinforcement fiber sheet 1 are impregnated by a thermosetting resin by coating the resin using adequate coating means such as a roller, a brush, spraying, etc. Then, as shown in Fig. 5, the reinforcement fiber sheet 1 is wound by a desired number of turns or layers, by taking the direction of the carbon fibers 4 into consideration, on the surface of a portion of the reinforced concrete electric pole 9 to be repaired with the carbon fibers 4 on the side of the electric pole 9. Then, the reinforcement fiber sheet 11 of insulating fibers impregnated with a thermosetting resin is wound as the outermost layer. Then, like the previous case a cover is provided, and the thermosetting resin is cured to render the sheet 1 into a fiber reinforced plastic.

In a further form of the invention, the support sheet 2 of the reinforced fiber sheet is permeable to resin. As shown in Fig. 6, a resin of the same form as thermosetting resin is coated as a primer 6 on the surface of a portion of the reinforced concrete electric pole 9 to be repaired. Then, the base reinforcement fiber sheet 1 is wound on the coating by a desired number of turns or layers by taking the direction of the carbon fibers 4 into consideration, and then the reinforcement fiber sheet 11 of insulating fibers is wound as the outermost layer. Then, the carbon fibers 4 and the insulating fibers are impregnated with thermosetting resin 5 from the sheet 11 using a roller or the like. Thereafter, like the previous cases a cover is provided, and then the thermosetting resin is cured to render the sheet 1 into a fiber reinforced plastic.

In the above cases, the base reinforcement fiber sheet 1 is wound with the carbon fibers 4 on the side of the reinforced concrete electric pole 9. However, this is by no means limitative, and the support sheet 2 may be on the side of the electric pole 9. Also, while in the above cases the base reinforcement fiber sheet 1 is used as the reinforcement material, it is possible as well to use carbon fiber cloths, mats, strands, etc. as the reinforcement material. This also applies to the sheet 11 of insulating fibers, that is, the form of the insulating reinforcement material is not limited to the sheet. With the method of repair having the above constitution according to the invention has the following effects.
(1) Since the reinforced concrete electric pole 9 is repaired by rendering the base reinforcement fiber sheet 1 of carbon fibers into a fiber reinforced plastic, it is possible to restore the mechanical strength of the electric pole 9.
(2) Since the reinforcement fiber sheet 11 of insulating fibers as the outermost layer on the base reinforcement fiber sheet 1 of carbon fibers, the obtained fiber reinforced plastic of carbon fibers may be made insulating, and it is possible to complete a repair to prevent occasional electric accidents and ensure daily safety.
(3) Since it is possible to restore the mechanical strength of the reinforced concrete electric pole 9, there is no need of replacing the electric pole 9.
(4) Since the reinforcement fiber sheets and thermosetting resin can all be transported and handled manually, the repair operation as a whole can be readily carried out.
(5) It is possible to carry out the repair operation in a short period of time.

Now, experiments will be described, which were conducted to examine the effects of providing the reinforcement fiber sheet of insulating fibers as the outermost layer in the method of repair according to the invention.

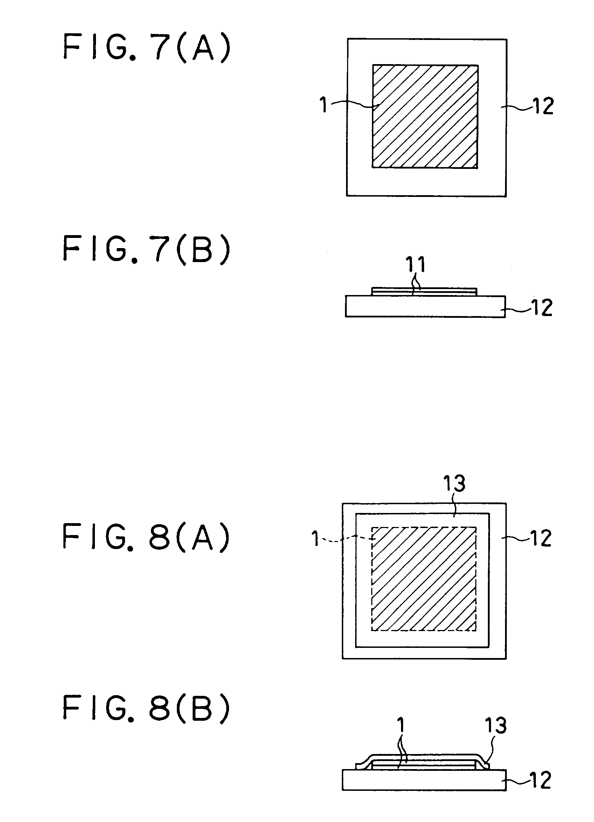

Sample No. 1 (comparative example) and Sample No. 2 (example) were produced. In Sample No. 1, as shown in Fig. 7 (A) and (B), uni-directionally arranged reinforcement fiber sheet 1 of carbon fibers with dimensions of 80 mm by 80 mm was laminated by one layer in the direction of 0 degrees and also one layer in the direction of 90 degrees on a mortar sheet 12 with dimensions of 100 mm by 100 mm and a thickness of 10 mm. In Sample No. 2, as shown in Fig. 8(A) and (B), a glass cloth 13 with dimensions of 90 mm by 90 mm was laminated as the outermost layer on the sheet 1.

As the reinforcement fiber sheet 1 was used "FORCA TOW SHEET FTS-C1-17" using carbon fibers, manufactured by Tonen Co., Ltd. This reinforcement fiber sheet had a carbon fiber area of weight of 175 g/m, a tensile strength of 380 kg/cm width, a modulus of elasticity of 25,000 kg/cm width, and a breakage elongation of 1.5 %. The carbon fibers had a density of 1.8 g/cm³, a fiber diameter of 7 µm, a tensile strength of 500 kg/mm, a modulus of elasticity of 23.5 tons/mm and a breakage elongation of 1.5 %. As the thermosetting resin was used an epoxy type room temperature thermosetting resin.

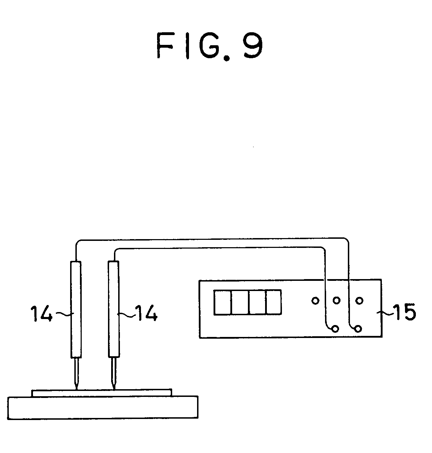

With these samples, the resistivity of their surface was measured using a resistance meter 15 as shown in Fig. 9 by perpendicularly applying needle-like ends of two detection rods 14 to the surface with the distance between the rods 14 set to 10 mm. When the measured resistance is a threshold value (30 x 10⁶) or above of the tester 15, it was judged to be non-conductive.

The results are as in Table 1.

**Table 1**

| | Resitance (conductivity) | |
|---|---|---|
| Sample | measured with hand load | measured with a load of 5 kgf |
| No. 1 | 30 x 10⁶ or above (non-conductive) | 0.9 x 10⁻³ or above (conductive) |
| No. 2 | 30 x 10⁶ or above (non-conducive) | 30 x 10⁶ or above (non-conductive) |

As is seen from Table 1, with Sample No. 1, in which the glass cloth 13 of insulating glass fibers is not provided on the surface, the judgment as a result of measurement with a load of 5 kgf applied to the detection rods 14 is that the surface is conductive, indicating inferior insulation. On the other hand, with Sample No. 2, in which the glass cloth 13 of insulating glass fibers is provided on the surface, the judgment as a result of measurement with a load of 5 kgf applied to the detection rods 14 is that the surface is non-conductive, indicating satisfactory insulation.

It will be seen from the above comparison that with the method according to the invention not only the mechanical strength of the electric pole can be restored, but it is possible to prevent occasional electric accidents and ensure daily safety after the repair.

As has been described in the foregoing, according to the invention, on an electric pole made of concrete such as reinforced concrete with the mechanical strength deteriorated in long outdoor use or due to damage caused by being struck by objects, a reinforcement fiber material of uni-directionally arranged carbon fibers is wound, a reinforcement fiber sheet of insulating fibers is then wound as the outermost layer, and these reinforcement fiber sheets are formed into a fiber reinforced plastic by impregnating with and curing a thermosetting resin. It is thus possible to readily repair concrete electric poles to restore the mechanical strength thereof and provide an electric pole, which can prevent occasional electric accidents and ensure daily safety.

## Claims

1. A method of repairing an electric pole (9) made of concrete CHARACTERISED BY comprising the steps of winding a base reinforcement material (1) containing carbon fibers (4) as reinforcement fibers on a portion of the concrete electric pole to be repaired, then winding an insulating reinforcement material (11) containing insulating fibers as reinforcement fibers as an outermost layer such as to fully cover said base reinforcement material, and then curing a thermosetting resin impregnating said carbon reinforcement fibers (4) and insulating reinforcement fibers.

2. A method of repair according to claim 1, wherein said base reinforcement material (1) is a uni-directionally arranged reinforcement fiber sheet having carbon fibers (4) arranged uni-directionally via an adhesive layer (3) on a support sheet (2), the latter for example being made of insulating fibers, such as glass fibers or aramide fibers.

3. A method of repair according to claim 2, wherein said uni-directionally arranged reinforcement fiber sheet (1) is wound at least by one layer such that the direction of the carbon fiber arrangment coincides with the circumferential direction of the electric pole (9) and at least by one layer such that the direction of the carbon fiber arrangement coincides with the axial direction of the electric pole.

4. A method of repair according to claim 2 or claim 3 , wherein said uni-directionally arranged reinforcement fiber sheet (1) is wound with said support sheet (2) on the outside.

5. A method of repair according to claim 2, wherein said support sheet has resin permeability.

6. A method of repair according to claim 5, wherein said support sheet (2) is glass cloth having a thickness of 100 µm or below.

7. A method of repair according to claim 1, wherein said base reinforcement material (1) is in the form of cloth or mat, and/or the insulating reinforcement material (11) is in the form of cloth or mat.

8. A method of repair according to claim 1, wherein said insulating reinforcement material (11) is a uni-directionally arranged reinforcement fiber sheet, e.g. in the form of cloth or mat, said insulating reinforcement fibers being arranged uni-directionally via an adhesive layer on a support sheet, said insulating reinforcement fibers for example being glass fibers or aramide fibers.

9. A method of repair according to claim 8, wherein said support sheet is made of insulating fibers.

10. A method of repair according to claim 1, wherein either said base reinforcement material is wound after impregnating said carbon fibers with a resin, and said insulating reinforcement material is wound after impregnating its insulating reinforcement fibers with a resin, or said base reinforcement material is wound before impregnating said carbon fibers with a resin, and said insulating reinforcement material is wound before impregnating its insulating reinforcement fibers with a resin.

11. A method of repair according to claim 1, wherein a resin is coated on the electric pole (9), then said base reinforcement material (1) is wound, said carbon fibers (4) are impregnated with a resin, a resin is coated on said base reinforcement material, then said insulating reinforcement material (11) is wound, and said insulating reinforcement fibers are impregnated with a resin.

12. An electric pole (9) made of concrete CHARACTERISED BY having a repair comprising an inner wound layer of a carbon fiber reinforced composite material (1) wound on the electric pole and an outer wound layer of an insulating fiber reinforced composite material (11) fully covering said carbon fiber reinforced composite material, said inner layer (1) being formed by a cured thermosetting resin impregnating the carbon fibers wound on the electric pole surface, and said outer layer being formed by a cured thermosetting resin impregnating the insulating reinforcement fibers of said insulating fibre reinforced composite material (11).

13. An electric pole made of concrete according to claim 12, wherein said carbon fibers in said inner layer (1) are uni-directionally arranged on a support sheet (4) via an adhesive layer (3) on said support sheet, and/or wherein said insulating reinforcement fibers in said outer layer (11) are uni-directionally arranged on a support sheet via an adhesive layer on said support sheet.

## Patentansprüche

1. Ein Verfahren zum Reparieren eines aus Beton hergestellten Strommastes (9), dadurch gekennzeichnet, daß es die Schritte umfaßt, daß ein Basisverstärkungsmaterial (1), das Kohlenstoffasern (4) als Verstärkungsfasern enthält, auf einen Teil des Betonstrommastes, der repariert werden soll, gewickelt wird, dann ein isolierendes Verstärkungsmaterial (11), das isolierende Fasern als Verstärkungsfasern enthält, als eine äußerste Schicht so gewickelt wird, daß es das Basisverstärkungsmaterial vollständig abdeckt, und dann ein wärmehärtendes Harz, das die Kohlenstoff-Verstärkungsfasern (4) und die isolierenden Verstärkungsfasern imprägniert, ausgehärtet wird.

2. Ein Reparierverfahren nach Anspruch 1, bei dem das Basisverstärkungsmaterial (1) eine Folie mit uni-direktional angeordneten Verstärkungsfasern ist, bei der Kohlenstoffasern (4) durch eine Klebmittelschicht (3) auf einer Trägerfolie (2) in einer Richtung angeordnet sind, wobei die letztere zum Beispiel aus isolierenden Fasern, wie Glasfasern oder Aramidfasern, hergestellt ist.

3. Ein Reparierverfahren nach Anspruch 2, bei dem die Folie (1) mit uni-direktional angeordneten Verstärkungsfasern so gewickelt wird, daß wenigstens in einer Schicht die Richtung der Kohlenstoffaseranordnung mit der Umfangsrichtung des Strommastes (9) zusammenfällt, und bei wenigstens einer Schicht die Richtung der Kohlenstoffaseranordnung mit der axialen Richtung des Strommastes zusammenfällt.

4. Ein Reparierverfahren nach Anspruch 2 oder Anspruch 3, bei dem die Folie (1) mit uni-direktional angeordneten Verstärkungsfasern mit der Trägerfolie (2) auf der Außenseite gewickelt wird.

5. Ein Reparierverfahren nach Anspruch 2, bei dem die Trägerfolie Harzdurchlässigkeit aufweist.

6. Ein Reparierverfahren nach Anspruch 5, bei dem die Trägerfolie (2) Glasgewebe mit einer Dicke von 100 µm oder weniger ist.

7. Ein Reparierverfahren nach Anspruch 1, bei dem das Basisverstärkungsmaterial (1) in der Form von Gewebe oder Matten vorliegt und/oder das isolierende Verstärkungsmaterial (11) in der Form von Gewebe oder Matten vorliegt.

8. Ein Reparierverfahren nach Anspruch 1, bei dem das isolierende Verstärkungsmaterial (11) eine Folie mit uni-direktional angeordneten Verstärkungsfasern, z.B. in Form von Gewebe oder Matten, ist, wobei die isolierenden Verstärkungsfasern in einer Richtung durch eine Klebmittelschicht auf einer Trägerfolie angeordnet sind und die isolierenden Verstärkungsfasern z.B. Glasfasern oder Aramidfasern sind.

9. Ein Reparierverfahren nach Anspruch 8, bei dem die Trägerfolie aus isolierenden Fasern hergestellt ist.

10. Ein Reparierverfahren nach Anspruch 1, bei dem jeweils das Basisverstärkungsmaterial nach Imprägnieren der Kohlenstoffasern mit einem Harz gewickelt wird und das isolierende Verstärkungsmaterial nach Imprägnieren seinerisolierenden Verstärkungsfasern mit einem Harz gewickelt wird oder das Basisverstärkungsmaterial vor dem Imprägnieren der Kohlenstoffasern mit einem Harz gewickelt wird und das isolierende Verstärkungsmaterial gewickelt wird, bevor seine isolierenden Verstärkungsfasern mit einem Harz imprägniert werden.

11. Ein Reparierverfahren nach Anspruch 1, bei dem ein Harz auf den Strommast (9) aufgetragen wird, dann das Basisverstärkungsmaterial (1) gewickelt wird, die Kohlenstoffasern (4) mit einem Harz imprägniert werden, ein Harz auf das Basisverstärkungsmaterial aufgetragen wird, dann das isolierende Verstärkungsmaterial (11) gewickelt wird und die isolierenden Verstärkungsfasern mit einem Harz imprägniert werden.

12. Ein aus Beton hergestellter Strommast (9), dadurch gekennzeichnet, daß er eine Reparaturstelle aufweist, die eine innere gewickelte Schicht aus einem kohlenstoffaserverstärkten Verbundmaterial (1), die auf den Strommast gewickelt ist, und eine äußere gewickelte Schicht auseinem isolierenden faserverstärkten Verbundmaterial (11), die das kohlenstoffaserverstärkte Verbundmaterial vollständig abdeckt, umfaßt, wobei die innere Schicht (1) durch ein gehärtetes wärmehärtendes Harz, das die auf die Oberfläche des Strommastes gewickelten Kohlenstoffasern imprägniert, gebildet wird, und die äußere Schicht durch ein gehärtetes wärmehärtendes Harz, das die isolierenden Verstärkungsfasern des isolierenden faserverstärkten Verbundmaterials (11) imprägniert, gebildet wird.

13. Ein aus Beton hergestellter Strommast nach Anspruch 12, bei dem die Kohlenstoffasern in der inneren Schicht (1) auf einer Trägerfolie (4) durch eine Klebmittelschicht (3) auf dieser Trägerfolie in einer Richtung angeordnet sind und/oder bei dem die isolierenden Verstärkungsfasern in der äußeren Schicht (11) auf einer Trägerfolie durch eine Klebmittelschicht auf der Trägerfolie in einer Richtung angeordnet sind.

## Revendications

1. Procédé pour réparer un poteau électrique (9) réalisé en béton, caractérisé en ce qu'il comprend les étapes consistant à enrouler un matériau de renfort de base (1) contenant des fibres de carbone (4) en tant que fibres de renfort sur une partie du poteau électrique en béton devant être réparé, puis enrouler un matériau de renfort isolant (11) contenant des fibres isolantes en tant que fibres de renfort pour constituer la couche la plus extérieure de manière à recouvrir complètement ledit matériau de renforcement de base, puis faire durcir une résine thermodurcissable imprégnant lesdites fibres de renfort en carbone (4) et lesdites fibres de renfort isolantes.

2. Procédé de réparation selon la revendication 1, selon lequel ledit matériau de renfort de base (1) est une feuille formée de fibres de renfort disposées de façon unidirectionnelle et comportant des fibres de carbone (4) disposées de façon unidirectionnelle moyennant l'interposition d'une couche adhésive (3) sur une feuille de support (2), cette dernière étant constituée par exemple par des fibres isolantes, telles que des fibres de verre ou des fibres d'aramide.

3. Procédé de réparation selon la revendication 2, selon lequel on enroule ladite feuille (1) formée de fibres de renfort disposées de façon unidirectionnelle, au moins selon une couche dans laquelle la direction de l'agencement des fibres de carbone coïncide avec la direction circonférentielle du poteau électrique (9), et au moins selon une couche dans laquelle la direction de l'agencement des fibres de carbone coïncide avec la direction axiale du pôle électrique.

4. Procédé de réparation selon la revendication 2 ou 3, selon lequel ladite feuille (1) formée de fibres de renfort disposées de façon unidirectionnelle est enroulée avec ladite feuille de support (2) située sur le côté extérieur.

5. Procédé de réparation selon la revendication 2, selon lequel ladite feuille de support présente une perméabilité à la résine.

6. Procédé de réparation selon la revendication 5, selon lequel ladite feuille de support (2) est un tissu de verre possédant une épaisseur de 100 µm ou moins.

7. Procédé de réparation selon la revendication 1, selon lequel ledit matériau de renfort de base (1) se présente sous la forme d'un tissu ou d'un mat et/ou le matériau de renfort isolant (11) se présente sous la forme d'un tissu ou d'un mat.

8. Procédé de réparation selon la revendication 1, selon lequel ledit matériau de renfort isolant (11) est une feuille formée de fibres de renfort disposées de façon unidirectionnelle, par exemple sous la forme d'un tissu ou d'un mat, lesdites fibres de renfort isolantes étant disposées de façon unidirectionnelle moyennant l'interposition d'une couche adhésive sur une feuille de support, lesdites feuilles de renfort isolantes étant par exemple des fibres de verre ou des fibres d'aramide.

9. Procédé de réparation selon la revendication 9, selon lequel ladite feuille de support est formée de fibres isolantes.

10. Procédé de réparation selon la revendication 1, selon lequel ledit matériau de renfort de base est enroulé après imprégnation desdites fibres de carbone avec une résine, et ledit matériau de renfort isolant est enroulé après imprégnation de ses fibres de renfort isolantes avec une résine, ou bien ledit matériau de renfort de base est enroulé avant l'imprégnation desdites fibres de carbone avec une résine, et ledit matériau de renfort isolant est enroulé avant imprégnation de ses fibres de renfort isolantes avec une résine.

11. Procédé de réparation selon la revendication 1, selon lequel on dépose une résine sur le poteau électrique (9), puis on enroule ledit matériau de renfort de base (1), on imprègne lesdites fibres de carbone (4) avec une résine, on recouvre ledit matériau de renfort de base avec une résine, puis on enroule ledit matériau de renfort isolant (11) et on imprègne lesdites fibres de renfort isolantes avec une résine.

12. Poteau électrique (9) réalisé en béton, caractérisé en ce qu'il comporte une réparation comprenant une couche intérieure enroulée formée d'un matériau composite (1) renforcé par des fibres de carbone, enroulé sur le poteau électrique, et une couche extérieure enroulée formée d'un matériau composite (11) renforcé par des fibres isolantes et qui recouvre complètement ledit matériau composite renforcé par des fibres de carbone, ladite couche intérieure (1) étant formée par une résine thermodurcissable durcie imprégnant les fibres de carbone enroulées sur la surface du poteau électrique, et ladite couche extérieure étant formée par une résine thermodurcissable durcie imprégnant les fibres de renfort isolantes dudit matériau composite (11) renforcé par des fibres isolantes.

13. Poteau électrique réalisé en béton selon la revendication 12, dans lequel lesdites fibres de carbone de ladite couche intérieure (1) sont disposées de façon unidirectionnelle sur une feuille de support (4) moyennant l'interposition d'une couche d'adhésif (3) sur ladite feuille de support et/ou dans lequel lesdites fibres de renfort isolantes contenues dans ladite couche extérieure (11) sont disposées de façon unidirectionnelle sur une feuille de support moyennant l'interposition d'une couche d'adhésif sur ladite feuille de support.
